# EUROPEAN PATENT APPLICATION

(11) **EP 4 167 610 A1**
(43) Date of publication of application: **19.04.2023**
(21) Application number: 21826112.1
(22) Date of filing: 08.06.2021
(51) Int. Cl.: H04W 4/42, H04W 88/16

(54) **ACCELERATOR ENGINE, DATA PACKET TRANSMISSION SYSTEM, DEVICE AND METHOD AND STORAGE MEDIUM**

(30) Priority: 16.06.2020 CN 202010546171
(71) Applicant: ZTE Corporation, Shenzhen, Guangdong 518057 (CN)
(72) Inventor: LI, Yun, Shenzhen, Guangdong 518057 (CN)
(74) Representative: Savi, Massimiliano
(86) International application number: PCT/CN2021/098906
(87) International publication number: WO 2021/254213

(57) **Abstract**

A Wi-Fi accelerator engine, a data packet transmission system, device and method and a storage medium. The Wi-Fi accelerator engine is configured to communicationally connect a CPU and a transceiver end, and is also configured to receive a management instruction sent by the CPU, receive a data packet sent by the transceiver end, parse the data packet, process the parsed data packet according to the received management instruction, and send the processed data packet to the transceiver end.

## Description

### CROSS-REFERENCE TO RELATED APPLICATION

The present disclosure is filed on the basis of Chinese patent application No. 202010546171.X filed June 16, 2020, and claims priority of the Chinese patent application, the entire content of which is incorporated herein by reference.

### TECHNICAL FIELD

Embodiments of the present disclosure relate to the technical field of communication, and in particular, to a Wi-Fi accelerator engine, a data packet transmission system, device and method, and a storage medium.

### BACKGROUND

In a traditional Access Point (AP) system, the forwarding of data packets requires the participation of a Central Processing Unit (CPU). With the rapid development of network services, data traffic in a network increases dramatically. For example, Wireless Fidelity (Wi-Fi) Alliance officially launched Wi-Fi 6, namely 802.11ax standard, which is defined by the Institute of Electrical and Electronics Engineers (IEEE). According to Wi-Fi 6, the Wi-Fi rate has been greatly increased. However, the increase in the Wi-Fi rate brings higher throughput, and at the same time increases the resource utilization rate of the CPU, making the CPU overloaded.

### SUMMARY

Embodiments of the present disclosure provide a Wi-Fi accelerator engine, a data packet transmission system, device and method, and a storage medium.

An embodiment of the present disclosure provides a Wi-Fi accelerator engine which is communicatively connected to a CPU and configured to receive a management instruction sent by the CPU. The Wi-Fi accelerator engine is further communicatively connected to a transceiver end, and configured to receive a data packet sent by the transceiver end, parse the received data packet, process the parsed data packet according to the received management instruction, and send the processed data packet to the transceiver end.

An embodiment of the present disclosure provides a data packet transmission system including the above-mentioned Wi-Fi accelerator engine.

An embodiment of the present disclosure further provides a data packet transmission method including: receiving a data packet sent by the transceiver end; parsing the data packet according to a received management instruction; processing the parsed data packet according to the received management instruction to obtain processed data packet; and sending the processed data packet to the transceiver end.

An embodiment of the present disclosure further provides a data packet transmission device including a memory, a processor, a program stored in the memory and executable by the processor, and a data bus configured to implement connection and communication between the processor and the memory, where the program, when executed by the processor, causes the processor to implement the aforementioned method.

An embodiment of the present disclosure provides a storage medium for computer-readable storage, where the storage medium stores one or more programs which, executed by one or more processors, cause the one or more processors to implement the aforementioned method.

### BRIEF DESCRIPTION OF DRAWINGS

Fig. 1 is a block diagram of a traditional Access Point (AP) system.
Fig. 2 is a block diagram of a data packet transmission system provided by an embodiment of the present disclosure.
Fig. 3 is a block diagram of a data packet transmission system provided by another embodiment of the present disclosure, where a transceiver end includes a switch and a Wi-Fi chip.
Fig. 4 is a flowchart of forwarding data packets by the switch in Fig. 3.
Fig. 5 is a flowchart of a data packet transmission method provided by an embodiment of the present disclosure.

### DETAILED DESCRIPTION

Objectives, technical schemes and advantages of the present disclosure will be clearer from a detailed description of embodiments of the present disclosure in conjunction with the drawings. It should be understood that the specific embodiments described here are only used to illustrate the present disclosure, and are not intended to limit the present disclosure.

It is to be noted, although functional modules have been divided in the schematic diagrams of apparatuses and logical orders have been shown in the flowcharts, in some cases, the modules may be divided in a different manner, or the steps shown or described may be executed in an order different from the orders as shown in the flowcharts. The terms such as "first", "second" and the like in the description, the claims, and the accompanying drawings are used to distinguish similar objects, and are not necessarily used to describe a specific sequence or a precedence order.

In the following description, a suffix such as "module" used to indicate an element is merely intended to facilitate description of embodiments of the present disclosure, and have no particular meaning.

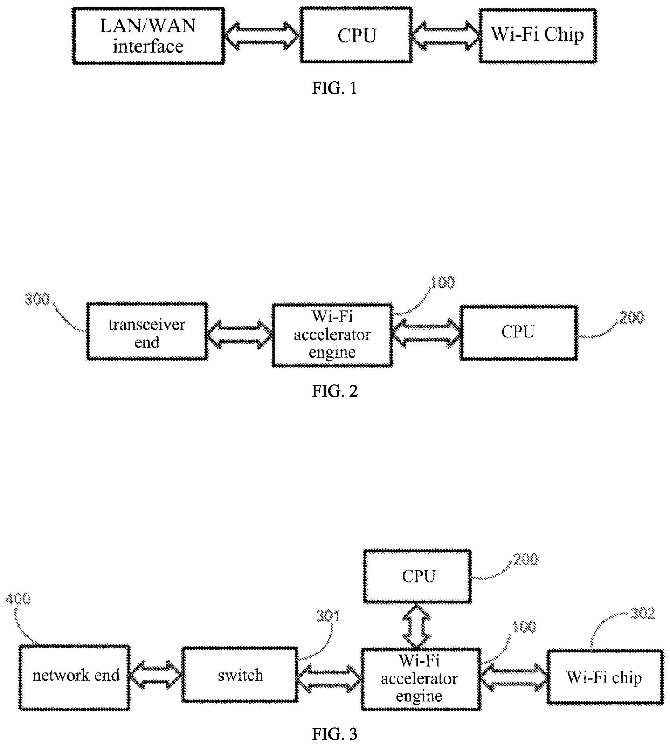

Referring to Fig. 1, it is a block diagram of a traditional Access Point (AP) system. As shown in Fig. 1, data packets from a Local Area Network (LAN) interface or a Wide Area Network (WAN) interface are forwarded to a Wi-Fi chip by a CPU, and data packets from the Wi-Fi chip are forwarded to the LAN/WAN interface by the CPU. Therefore, the CPU is prone to be overloaded.

In view of the above, referring to Fig. 2, an embodiment of the present disclosure provides a Wi-Fi accelerator engine 100. A hardware offloading technology is integrated in the Wi-Fi accelerator engine 100, and is used to offload the work of processing data packet originally performed by the CPU to the Wi-Fi accelerator engine 100, so that the data packet is processed by the Wi-Fi accelerator engine 100. The Wi-Fi accelerator engine 100 is configured to be communicatively connected to a CPU 200 and a transceiver end 300, respectively. The Wi-Fi accelerator engine 100 is configured to receive a management instruction sent by the CPU 200, and perform corresponding configuration management and data packet processing according to the received management instruction, so as to cooperate with the CPU 200 to complete data packet transmission, Statio (STA) access and other services according to a protocol specification. In an example of the present disclosure, the data packet may be of Wi-Fi data packets, and may be packets of various protocols, such as Transmission Control Protocol (TCP) packets. In an embodiment, the protocol specification is the IEEE 802.11 standard defined by the Institute of Electrical and Electronics Engineers (IEEE). The Wi-Fi accelerator engine 100 is further configured to receive a data packet sent by the transceiver end 300, parse the received data packet, process the parsed data packet according to a management instruction, and send the processed data packet to the transceiver end 300, so that the processed data packet meets the requirements of the transceiver end 300. The transceiver end 300 is configured to receive a data packet sent by the Wi-Fi accelerator engine 100. The transceiver end 300 is further configured to send a data packet to the Wi-Fi accelerator engine 100, and the Wi-Fi accelerator engine 100 is further configured to receive the data packet sent by the transceiver end 300.

In an embodiment, referring to Fig. 3, the transceiver end 300 includes a switch 301, to which the Wi-Fi accelerator engine 100 is configured to be communicatively connected. The switch 301 is configured to receive a data packet sent from a network end 400 and forward the received data packet to the Wi-Fi accelerator engine 100. The Wi-Fi accelerator engine 100 is configured to receive the data packet forwarded by the switch 301. The transceiver end 300 further includes a Wi-Fi chip 302, to which the Wi-Fi accelerator engine 100 is further configured to be communicatively connected. The Wi-Fi accelerator engine 100 is further configured to send the received data packet to the Wi-Fi chip 302. The Wi-Fi chip 302 is further configured to receive the data packet sent by the Wi-Fi accelerator engine 100. The Wi-Fi chip 302 is further configured to receive data packet sent by an air interface, and send the received data packet to the Wi-Fi accelerator engine 100. In an embodiment, the network end 400 may include, but not limited to, a Local Area Network (LAN) end or a Wide Area Network (WAN) end.

In an embodiment of the present disclosure, the Wi-Fi accelerator engine 100 includes the following modules.

A receiving module is configured to receive a data packet sent by the transceiver end. In an uplink embodiment, the receiving module receives uplink packets sent by the Wi-Fi chip 302. In a downlink embodiment, the receiving module receives downlink packets forwarded by the switch 301. In the downlink embodiment, the receiving module is configured to perform the following steps.

The downlink packets forwarded by the switch 301 is received.

A priority management is performed on the received downlink packets. In an embodiment, the priority management is a Quality of Service (QoS) priority management, and a method for QoS priority management is not limited in the embodiment of the present disclosure.

A parsing module is configured to parse the received data packet. In an uplink embodiment, the parsing module is configured to parse uplink packets sent by the Wi-Fi chip 302 according to receiving descriptor. In a downlink embodiment, the parsing module is configured to parse downlink packets in sequence according to an order of priorities of the downlink packets.

A processing module is configured to process the parsed data packet according to a management instruction. In an uplink embodiment, the parsed uplink packet is processed to meet the requirements of the switch 301 for data packet. In a downlink embodiment, the parsed downlink packets are processed to meet the requirements of the Wi-Fi chip 302 for data packets.

A transmission module is configured to send the processed data packet to the transceiver end 300. In a downlink embodiment, the processed downlink packets are sent to the Wi-Fi chip 302. In the downlink embodiment, the processed downlink packets are sent to the Wi-Fi chip 302 by means of Direct Memory Access (DMA). In an uplink embodiment, the processed uplink packets are sent to the switch 301. In the uplink embodiment, because the uplink packets sent by the Wi-Fi chip 302 may be out of order, the received uplink packets need to be reordered. The transmission module is configured to perform the following steps.

The processed uplink packets are reorder according to a protocol specification, where in an embodiment, the protocol specification is the IEEE 802.11 standard.

The reordered uplink packets are transmitted to the switch 301in sequence.

Referring to Fig. 2 and Fig. 3, an embodiment of the present disclosure further provides a data packet transmission system including a Wi-Fi accelerator engine 100. In some examples, the data packet transmission system further includes a transceiver end 300. The Wi-Fi accelerator engine 100 is configured to be communicatively connected to a CPU 200, receive a management instruction sent by the CPU 200, and perform corresponding configuration management and data packet processing according to the received management instruction, so as to cooperate with the CPU 200 to complete data packet transmission, STA access and other services according to a protocol specification. In an embodiment, the protocol specification is the IEEE 802.11 standard. The Wi-Fi accelerator engine 100 is further configured to be communicatively connected to the transceiver end 300 and receive a data packet sent by the transceiver end 300. The Wi-Fi accelerator engine 100 is further configured to parse the received data packet, process the parsed data packet according to the management instruction, and send the processed data packet to the transceiver end 300, such that the processed data packet meets the requirements of the transceiver end 300.

The transceiver end 300 includes a switch 301, to which the Wi-Fi accelerator engine 100 is configured to be communicatively connected. The switch 301 is configured to receive a data packet sent from a network end 400. In some examples, in order to reduce network delay and congestion, the Wi-Fi accelerator engine 100 is configured to perform priority management on data packet received from the switch 301.

The transceiver end 300 further includes a Wi-Fi chip 302, to which the Wi-Fi accelerator engine 100 is further configured to be communicatively connected. The Wi-Fi chip 302 is configured to receive a data packet sent through an air interface and fill in corresponding receiving descriptor and payload data according to the received data packet, where the payload data is written into the data packet which is stored in a first buffer area, while the receiving descriptor is stored in a second buffer area. The data packet is in one-to-one correspondence with the receiving descriptor, that is, each data packet corresponds to a unique receiving descriptor. The receiving descriptor is used to describe the corresponding data packet, such as functions and effects of the corresponding data packet. The Wi-Fi chip 302 is further configured to send the received data packet and the receiving descriptor corresponding to the data packet together to the Wi-Fi accelerator engine 100. In an embodiment, in order not to rely on a large amount of interrupt load of the CPU 200, DMA is adopted in the transmission of the data packets between the Wi-Fi accelerator engine 100 and the Wi-Fi chip 302. The Wi-Fi chip 302 is configured to send the received data packet and the receiving descriptor corresponding to the data packet together to the Wi-Fi accelerator engine 100 by means of DMA.

In an embodiment of the present disclosure, a set of data packets include the downlink packet and the uplink packets according to sources of the data packets, that is, the set of data packets has two sources: downlink packets and uplink packets. The switch 301 is configured to determine a source of the data packet according to the received data packet, and forward the data packet to the Wi-Fi accelerator engine 100 or the network end 400 according to the source of the data packet. The operating principle of the switch 301 for processing data packets is as follows.

A data packet is received.

A sources of the data packet is determined according to the received data packets.

An uplink packet is forwarded to the network end 400 when a determination is made that the source of the data packet is an uplink packet, while a downlink packet is forwarded to the Wi-Fi accelerator engine 100 when a determination is made that the source of the data packet is a downlink packet.

Determining source of data packet according to the received data packet includes the following steps.

A source port of the received data packet is determined whether is a port of the Wi-Fi accelerator engine, if yes, the source of the data packet is determined to be an uplink packet; otherwise, a destination port of the data packet is determined whether is a port of the Wi-Fi chip; if yes, the source of the data packet is determined to be a downlink packet.

If the switch 301 finds that the source port of the data packet is the port of the Wi-Fi accelerator engine 100, it is determined that the data packet is the uplink packet, and then the uplink packet is forwarded to the port of the network end 400 according to preset rules configured by the CPU, thus completing the packet processing. If the switch 301 finds that the source port of the data packet is the port of the network end 400, it is further determined whether the destination port of the data packet is the port of the Wi-Fi accelerator engine 100 according to the preset rules, if the destination port is not the port of the Wi-Fi accelerator engine 100, it is indicated that the data packet is not the downlink packet sent to the Wi-Fi chip 302, and the data packet is sent to the corresponding port of the network end 400 other than the Wi-Fi accelerator engine 100 by means of the preset rules. If the destination port of the data packet is the port of the network end 400, it is indicated that the data packet is the downlink packet sent to the Wi-Fi chip 302, and then the downlink packet is sent to the Wi-Fi accelerator engine 100 for subsequent service processing by the Wi-Fi accelerator engine 100.

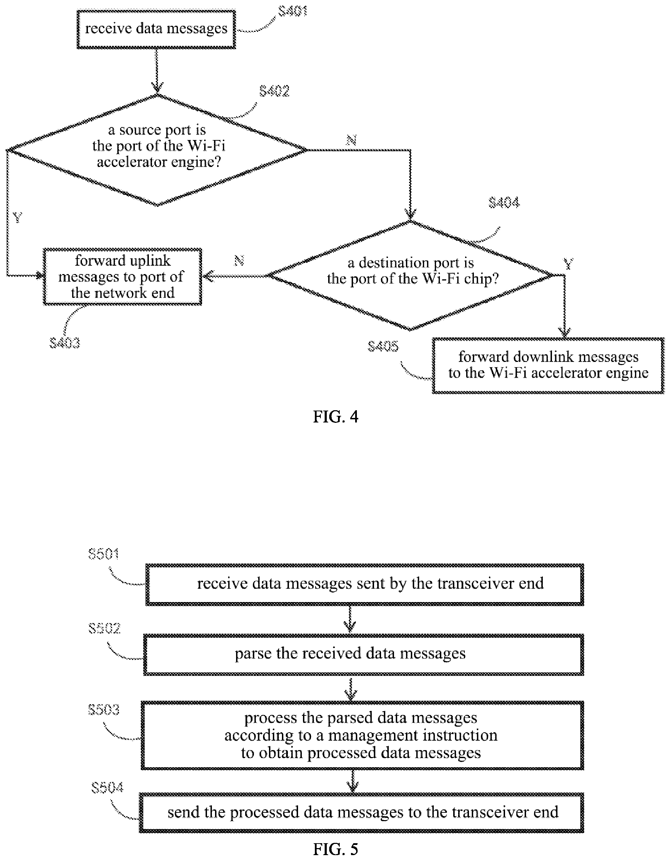

Referring to Fig. 4, the forwarding data packet by the switch 301 includes following steps.

At S401, a data packet is received, where the data packet includes a downlink packet and an uplink packet.

At S402, it is determined whether a source port of the received data packet is a port of the Wi-Fi accelerator engine; if yes, step S403 is performed; otherwise, step S404 is performed. That is, if it is determined that the source port of the received data packet is the port of the Wi-Fi accelerator engine, it is indicated that the received data packet is the uplink packet. If it is determined that the source port of the received data packet is not the port of the Wi-Fi accelerator engine, it is indicated that the source port of the received data packet is the port of the network end 400, so it is required to further determine whether the destination port of the data packet is the port of the Wi-Fi chip 302 according to the preset rules configured by the CPU, and step S404 is performed.

At S403, the uplink packet is forwarded to the port of the network end 400, where in an embodiment, the uplink packet is forwarded to the port of the network end 400 according to the preset rules configured by the CPU.

At S404, it is determined whether the destination port of the data packet is the port of the Wi-Fi chip 302; if yes, step S405 is performed; otherwise, step S403 is performed.

At S405, the downlink packet is forwarded to the Wi-Fi accelerator engine 100.

In an uplink embodiment, processing the data packet by the Wi-Fi chip 302 includes the following steps.

The uplink packet is received, where in an embodiment the Wi-Fi chip 302 receives the uplink packet from an air interface.

The received uplink packet is filled with received descriptor and payload data.

Both the filled-in uplink packet and the received descriptor are sent to the Wi-Fi accelerator engine 100, where the filled-in uplink packet includes payload data. In an embodiment, both the uplink packet and the received descriptor are sent to the Wi-Fi accelerator engine 100 by means of DMA.

In a downlink embodiment, processing the data packet by the Wi-Fi chip 302 includes the following steps.

The downlink packet is received, where in an embodiment a processed downlink packet sent by the Wi-Fi accelerator engine 100 is received.

Both the sending descriptor and payload data are filled according to a preset rule which is configured by the CPU.

Both the filled-in uplink packet and the sending descriptor are sent through the air interface, where the filled-in downlink packet includes payload data.

Referring to Fig. 5, a data packet transmission method which is applied to the Wi-Fi accelerator engine 100 includes following steps.

At S501, a data packet sent by the transceiver end is received. In an uplink embodiment, the Wi-Fi accelerator engine 100 receives an uplink packet sent by the Wi-Fi chip 302. In a downlink embodiment, the Wi-Fi accelerator engine 100 receives a downlink packet forwarded by the switch 301. In the downlink embodiment, S501 includes the following steps.

The downlink packet forwarded by the switch 301 is received.

A priority management is performed on the received downlink packets, where in an embodiment the priority management is performed by means of QoS.

At S502, the received data packet is parsed. In an uplink embodiment, the Wi-Fi accelerator engine 100 parses the uplink packet sent by the Wi-Fi chip 302 according to received descriptor. In a downlink embodiment, the Wi-Fi accelerator engine 100 parses a plurality of downlink packets in sequence according to an order of priorities of the plurality of downlink packets.

At S503, the parsed data packet is processed according to a management instruction to obtain processed data packet. In an uplink embodiment, the parsed uplink packet is processed to meet the requirements of the switch 301 for data packet. In a downlink embodiment, the parsed downlink packet is processed to meet the requirements of the Wi-Fi chip 302 for data packet.

At S504, the processed data packet is sent to the transceiver end 300. In a downlink embodiment, the processed downlink packet is sent to the Wi-Fi chip 302. In the downlink embodiment, the processed downlink packet is sent to the Wi-Fi chip 302 by means of DMA. In an uplink embodiment, the processed uplink packet is sent to the switch 301. In the uplink embodiment, because the uplink packet sent by the Wi-Fi chip 302 may be out of order, the received uplink packet is required to be reordered. Therefore, S504 includes the following steps.

The processed uplink packet is reordered according to a protocol specification which, in an embodiment, is the IEEE 802.11 standard.

The reordered uplink packet is transmitted to the switch 301 in sequence.

According to the data packet transmission method provided by the embodiment of the present disclosure, the Wi-Fi accelerator engine 100 is configured to receive the management instruction sent by the CPU 200 and the data packet sent by the transceiver end, parse the data packet according to the received management instruction, process the parsed data packet according to the received management instruction, and send the processed data packet to the transceiver end 300. A hardware, Wi-Fi accelerator engine 100, offloads the work of receiving, parsing, processing and transmitting the data packet originally required to be completed by the CPU 200 to the hardware, Wi-Fi accelerator engine 100, for completion by the hardware, Wi-Fi accelerator engine 100, and the CPU 200 only needs to manage the Wi-Fi accelerator engine 100, thereby reducing the load of the CPU, and making full use of the advantages of hardware parallelism and high efficiency.

In a practical downlink transmission, a data packet transmission process includes the following steps.

The switch 301 is configured to receive the downlink packet sent by the network end 400.

The switch 301 is configured to forward the received downlink packet to the Wi-Fi accelerator engine 100.

The Wi-Fi accelerator engine 100 is configured to perform a priority management on the downlink packet received from the switch 301, where in an embodiment the priority management is performed by means of QoS.

The Wi-Fi accelerator engine 100 is configured to parse the downlink packet in sequence according to an order of priorities of the downlink packets.

The Wi-Fi accelerator engine 100 is configured to process the parsed downlink packet, where, in an embodiment, the Wi-Fi accelerator engine 100 is configured to process the parsed downlink packet including: modifying the parsed downlink packet, such that the modified downlink packet is suitable for transmission by the Wi-Fi chip 302.

The Wi-Fi accelerator engine 100 is configured to fill sending descriptor and payload data according to preset rules, where the downlink packet includes payload data, the downlink packet is in one-to-one correspondence with the sending descriptor, that is, each downlink packet corresponds to a unique sending descriptor, and the sending descriptor is used to describe the corresponding downlink packet, such as function and effect of the corresponding downlink packet, and where the preset rule meets the requirements of the Wi-Fi chip 302 for data packet.

The Wi-Fi accelerator engine 100 is configured to transmit the filled-in downlink packet and the sending descriptor together to the Wi-Fi chip 302, where in an embodiment the Wi-Fi accelerator engine 100 is configured to transmit the filled-in downlink packet and the sending descriptor together to the Wi-Fi chip 302 by means of DMA.

The Wi-Fi chip 302 is configured to receive the downlink packet and the sending descriptor sent by the Wi-Fi accelerator engine 100, where in an embodiment the Wi-Fi chip 302 is configured to receive the downlink packet and the sending descriptor sent by the Wi-Fi accelerator engine 100 by means of DMA.

The Wi-Fi chip 302 is configured to send the downlink packet and the sending descriptor together through an air interface.

In a practical uplink transmission, a data packet transmission process includes the following steps.

The Wi-Fi chip 302 is configured to receive the uplink packet through an air interface.

The Wi-Fi chip 302 is configured to fill receiving descriptor and payload data according to preset rules, where the uplink packet includes payload data, the uplink packet is in one-to-one correspondence with the receiving descriptor, that is, each uplink packet corresponds to a unique receiving descriptor, and the receiving descriptor is used to describe corresponding uplink packet, such as function and effect of the corresponding uplink packet, and where the preset rule meets the requirements of the network end 400 for the uplink packets.

The Wi-Fi chip 302 is configured to send the uplink packet and the receiving descriptor together to the Wi-Fi accelerator engine 100, where in an embodiment the Wi-Fi chip 302 is configured to send the uplink packet and the receiving descriptor together to the Wi-Fi accelerator engine 100 by means of DMA.

The Wi-Fi accelerator engine 100 is configured to receive the uplink packet and the receiving descriptor sent by the Wi-Fi chip 302, where in an embodiment the Wi-Fi accelerator engine 100 is configured to receive the uplink packet and the receiving descriptor sent by the Wi-Fi chip 302 by means of DMA.

The Wi-Fi accelerator engine 100 is configured to parse the received uplink packet and the receiving descriptors.

The Wi-Fi accelerator engine 100 is configured to process the parsed uplink packet; where the parsed uplink packet processed by the Wi-Fi accelerator engine 100 is suitable for transmission by the network end 400.

The Wi-Fi accelerator engine 100 is configured to reorder the processed uplink packet according to a protocol specification, which, in an embodiment, is the IEEE 802.11 standard, and because the uplink packet sent by the Wi-Fi chip 302 may be out of order, the received uplink packet need to be reordered.

The Wi-Fi accelerator engine 100 is configured to transmit the reordered uplink packet to the switch 301 in sequence.

The switch 301 is configured to receive the uplink packet sent by the Wi-Fi accelerator engine 100.

The switch 301 is configured to forward the received uplink packet to the network end 400.

In the embodiment of the present disclosure, during the downlink transmission process, the data packet is a downlink packet. The switch 301 is configured to receive the downlink packet sent by the network end 400 and forward the received downlink packet to the Wi-Fi accelerator engine 100. The Wi-Fi accelerator engine 100 is configured to perform a QoS priority management on the received downlink packet, parse the downlink packet, process the parsed downlink packet according to a protocol specification, fill in sending descriptor and payload data for the processed downlink packet according to preset rules, and modify the downlink packet, such that the modified downlink packet is suitable for transmission by the Wi-Fi chip 302. The Wi-Fi accelerator engine 100 is also configured to send the downlink packet and the sending descriptor to the Wi-Fi chip 302 by means of DMA. The Wi-Fi chip 302 is configured to receive the downlink packet and the sending descriptor sent by the Wi-Fi accelerator engine 100, and send the received downlink packet through the air interface.

During the uplink transmission process, the data packet is an uplink packet. The Wi-Fi chip 302 is configured to receive the uplink packet through the air interface. The Wi-Fi chip 302 is configured to fill in receiving descriptor and payload data for the received uplink packet, and send the uplink packet and the receiving descriptor together to the Wi-Fi accelerator engine 100 by means of DMA. The Wi-Fi accelerator engine 100 is configured to parse the received uplink packet and the receiving descriptor, and process the parsed uplink packet, such that the processed uplink packet is suitable for transmission by the network end 400. The Wi-Fi accelerator engine 100 is also configured to reorder the processed uplink packet according to a protocol specification, and send the reordered uplink packet to the switch 301 in sequence. The switch 301 is configured to receive the uplink packet sent by the Wi-Fi accelerator engine 100, and forward the received uplink packet to the network end 400. In an embodiment, the protocol specification is the IEEE 802.11 standard.

According to the Wi-Fi accelerator engine, data packet transmission system, method and device, and storage medium provided by the embodiments of the present disclosure, a Wi-Fi accelerator engine 100 is configured to receive a management instruction sent by a CPU 200 and a data packet sent by a transceiver end 300, parse the data packet according to the received management instruction, process the parsed data packet according to the received management instruction, and send the processed data packet to the transceiver end 300. A hardware, Wi-Fi accelerator engine 100, offloads the work of receiving, parsing, processing and transmitting the data packet originally required to be completed by the CPU to the hardware, Wi-Fi accelerator engine 100, for completion by the by the hardware, Wi-Fi accelerator engine 100, and the CPU 200 only needs to manage the Wi-Fi accelerator engine 100, thereby reducing the load of the CPU, and making full use of the advantages of hardware parallelism and high efficiency.

According to the Wi-Fi accelerator engine, data packet transmission system, method and device, and storage medium provided by the embodiments of the present disclosure, a Wi-Fi accelerator engine is configured to receive a data packet sent by a transceiver end, parse the data packet according to a received management instruction, process the parsed data packet according to the received management instruction, and send the processed data packet to the transceiver end. A hardware, Wi-Fi accelerator engine, offloads the work of receiving, parsing, processing and transmitting the data packet originally required to be completed by the CPU to the hardware, Wi-Fi accelerator engine, for completion by the by the hardware, Wi-Fi accelerator engine 100, and the CPU only needs to manage the Wi-Fi accelerator engine, thereby reducing the load of the CPU.

As will be understood by those having ordinary skills in the art that all or some of the steps, systems and functional modules/units in the method disclosed above may be implemented as software, firmware, hardware and appropriate combinations thereof.

In the hardware implementation, the division between functional modules/units mentioned in the above description does not necessarily correspond to the division of physical components. For example, a physical component may have multiple functions, or a function or step may be cooperatively performed by multiple physical components. Some or all of the physical components may be implemented as software executed by a processor, such as a central processing unit, a digital signal processor or a microprocessor, or as hardware, or as an integrated circuit, such as an application specific integrated circuit. Such software may be distributed on a computer-readable medium which may include a computer storage medium (or a non-transitory medium) and a communication medium (or a transitory medium). As is well known to those having ordinary skills in the art, the term computer storage medium includes volatile and nonvolatile, removable and non-removable media implemented in any method or technology for storing information such as computer readable instructions, data structures, program modules or other data. A computer storage medium may include RAM, ROM, EEPROM, flash memory or other memory technology, CD-ROM, digital versatile disk (DVD) or other optical disk storage, magnetic cassette, magnetic tape, magnetic disk storage or other magnetic storage devices, or any other mediums that can be used to store desired information and can be accessed by a computer. In addition, as well known to those having ordinary skills in the art, the communication medium may generally include computer readable instructions, data structures, program modules or other data in modulated data signals such as carrier waves or other transmission mechanisms, and may include any information delivery medium.

Some of the embodiments of the present disclosure are described above in conjunction with the drawings, and not intended to limit the protection scope of the embodiments of the present disclosure. Any modification, equivalent replacement, and improvement made by those having ordinary skills in the art without departing from the scope and essence of the embodiments of present disclosure shall fall within the protection scope of the embodiments of the present disclosure.

## Claims

1. A Wi-Fi accelerator engine, communicatively connected to a CPU and a transceiver end respectively, the Wi-Fi accelerator engine being configured to:
receive a data packet sent by the transceiver end;
parse the received data packet;
process the parsed data packet according to a received management instruction sent by the CPU to obtain processed data packet; and
send the processed data packet to the transceiver end.

2. The Wi-Fi accelerator engine of claim 1, wherein the data packet comprises a downlink packet, and the transceiver end comprises a switch,
the Wi-Fi accelerator engine is configured to be communicatively connected to the switch, and the Wi-Fi accelerator engine is further configured to:
receive the downlink packet forwarded by the switch;
parse the downlink packet;
process the parsed downlink packet according to the received management instruction; and
send the processed downlink packet.

3. The Wi-Fi accelerator engine of claim 1 or 2, wherein the data packet further comprises an uplink packet, the transceiver end further comprises a Wi-Fi chip, the Wi-Fi accelerator engine is communicatively connected to the Wi-Fi chip, and the Wi-Fi accelerator engine is further configured to:
receive the uplink packet sent by the Wi-Fi chip;
parse the uplink packet;
process the parsed uplink packet according to the received management instruction; and
send the processed uplink packet.

4. A data packet transmission system, comprising the Wi-Fi accelerator engine of any one of claims 1 to 3.

5. The data packet transmission system of claim 4, further comprising a transceiver end, wherein the Wi-Fi accelerator engine is communicatively connected to the transceiver end which is configured to send the data packet to the Wi-Fi accelerator engine and receive the processed data packet sent by the Wi-Fi accelerator engine.

6. The data packet transmission system of claim 5, wherein the transceiver end comprises a switch, the data packet comprises the downlink packet, the Wi-Fi accelerator engine is communicatively connected to the switch, the switch is configured to receive the downlink packet sent from a network end and forward the received downlink packet to the Wi-Fi accelerator engine, and the Wi-Fi accelerator engine is configured to receive the downlink packet forwarded by the switch.

7. The data packet transmission system of claim 5 or 6, wherein the transceiver end further comprises a Wi-Fi chip, the data packet comprises the uplink packet, the Wi-Fi accelerator engine is communicatively connected to the Wi-Fi chip which is configured to receive the uplink packet sent by an air interface and send the received uplink packet to the Wi-Fi accelerator engine, and the Wi-Fi accelerator engine is configured to receive the uplink packet sent by the Wi-Fi chip.

8. A data packet transmission method, which is applied to a Wi-Fi accelerator engine, wherein the Wi-Fi accelerator engine is communicatively connected to a CPU and configured to receive a management instruction sent by the CPU, and the Wi-Fi accelerator engine is communicatively connected to a transceiver end, the data packet transmission method comprising:
receiving a data packet sent by the transceiver end;
parsing the data packet according to a received management instruction;
processing the parsed data packet according to the received management instruction to obtain processed data packet; and
sending the processed data packet to the transceiver end.

9. The data packet transmission method of claim 8, wherein the data packet comprises a downlink packet, the transceiver end comprises a switch, and receiving the data packet sent by the transceiver end comprises:
receiving the downlink packet forwarded by the switch; and
performing a priority management on the received downlink packet.

10. The data packet transmission method of claim 8 or 9, wherein the data packet further comprises an uplink packet, and sending the processed data packet to the transceiver end comprises:
reordering the processed uplink packet according to a protocol specification; and
transmitting the reordered uplink packet to the switch of the transceiver end in sequence.

11. A data packet transmission device, comprising a memory, a processor, a program stored in the memory and executable by the processor, and a data bus configured to implement connection and communication between the processor and the memory, wherein the program, when executed by the processor, causes the processor to perform the data packet transmission method of any one of claims 8 to 10.

12. A storage medium configured for computer-readable storage, wherein the storage medium stores one or more programs which, when executed by one or more processors, cause the one or more processors to perform the data packet transmission method of any one of claims 8 to 10.
